# EUROPEAN PATENT SPECIFICATION

(11) **EP 4 594 655 B1**
(45) Date of publication and mention of the grant of the patent: **30.09.2026**
(21) Application number: 23783496.5
(22) Date of filing: 22.09.2023
(51) Int. Cl.: F16D 65/092, F16D 69/00, F16D 69/02, F16D 69/04

(54) **BRAKE PAD UNIT, COMPOSITE BACKING PLATE AND METHOD OF MANUFACTURING A BACKING PLATE**
BREMSBELAGEINHEIT, VERBUNDGRUNDPLATTE UND VERFAHREN ZUR HERSTELLUNG EINER TRÄGERPLATTE
UNITÉ DE PATIN DE FREIN, PLAQUE DE SUPPORT COMPOSITE ET PROCÉDÉ DE FABRICATION D'UNE PLAQUE DE SUPPORT

(30) Priority: 30.09.2022 GB 202214423
(43) Date of publication of application: 06.08.2025
(73) Proprietor: Tribol Braking Ltd, Dawlish EX7 0JQ (GB)
(72) Inventor: SAVAGE, Luke, Exeter Devon EX4 4QJ (GB); ERLAND, Samuel, Exeter Devon EX4 4QJ (GB)
(74) Representative: Handsome I.P. Ltd
(86) International application number: PCT/GB2023/052459
(87) International publication number: WO 2024/069135

(56) References cited:
- WO-A1-2017/047629
- WO-A1-2018/230672
- WO-A1-96/05449
- FR-A1- 3 048 044
- GB-A- 2 260 173
- US-A- 5 984 055
- US-A1- 2009 031 550
- US-A1- 2010 065 389
- US-A1- 2015 159 709
- US-B1- 6 279 222

## Description

The present disclosure relates to a composite backing plate, brake pad unit and a method of manufacturing a backing plate. More specifically, the composite backing plate is for use with a disc brake assembly.

### Background

Disc brake assemblies, as used in motor vehicles as one of many examples, typically include a rotor. The rotor is a disc of the disc brake assembly which rotates as a wheel to which it is mounted rotates. A brake pad unit of the disc brake assembly contacts the rotor during braking to inhibit the rotation of the rotor by the action of friction. The brake pad unit may comprise a friction material provided on a backing plate. The friction material is what contacts the rotor.

Conventional automotive brake pads consist of the friction material bonded to a mild steel backing plate. Various developments have been made to reduce the weight of the brake pad by altering the design of the steel backing plate.

Brake pad units must pass various tests in relation to their robustness and performance, according to regulations which may apply in different territories. One example of a test is a sheer test which relates to the strength of the bond between the friction material and the backing plate.

It is desirable that when considering alternative constructions of components of brake pad units, that those alternative constructions be able to pass the various robustness and performance tests. For example, constructions alternative to a simple stamped stainless steel plate as a backing plate may be used to reduce the weight of the brake pad unit. It may be desirable, for example, that alternative constructions can be deployed without requiring an entirely different manufacturing apparatus and/or methodology while passing the various robustness and performance tests.

US6279222B1 describes a brake pad unit comprising a cast metal backing plate with projections configured to engage with a friction member mounted thereon so as to prevent separation of the friction member and the backing plate. WO9605449A1 describes a brake pad unit comprising a friction member and a backing plate, the brake pad assembly being formed in one piece from essentially the same material. WO2018230672A1 describes a brake pad assembly wherein the backing plate is formed of a lightweight material, the durability of which is improved by using a friction material, and/or an optional intermediate layer, with a relatively low thermal conductivity.

### Summary

The following aspects of the present disclosure provide features which provide an improved bond between a composite backing plate and a friction pad of a brake pad unit. The disclosed features generally provide a stronger bond between the backing plate and the friction pad. Advantageously, the disclosed features improve the resilience of the disclosed brake pad unit to shear forces (e.g., forces which urge the friction pad to slide on the backing plate and potentially detach). **In** the examples described herein a multi-material solid polymer composite may be used for the backing plate, which consists of non-metallic fibres and non-metallic polymer matrices (e.g., comprising non- metallic resin(s) and/or acting as binder(s)).

According to a first aspect of the present disclosure, there is provided a method of manufacturing a backing plate for carrying a friction material to form a brake pad unit of a disc brake assembly, the method comprising: forming a backing plate from a composite backing plate precursor such that the backing plate comprises a first side and a second side spaced apart from one another along a first axis, wherein forming the backing plate comprises: arranging the composite backing plate precursor in a mould; locating the mould in a heated press set at a temperature high enough to induce flow in a polymer matrix comprised in the composite backing plate precursor; and compacting the mould to compress the composite backing plate precursor to provide flow in the polymer matrix; such that the first side of the backing plate is configured as a brake mounting surface for engaging with a backing plate mounting structure of the disc brake assembly; and the second side is configured as a friction material mounting surface defining a moulded engagement feature; wherein the friction material mounting surface is defined by a layer of extended reinforcement fibres which extend from one side of the backing plate, in a continuous manner, to the opposite side of the backing plate; a first portion of the friction material mounting surface comprising the moulded engagement feature is offset in the direction of the first axis by a first offset amount with the respect to a backing plate plane, the backing plate plane being perpendicular to the first axis; a second portion of the friction material mounting surface excluding the moulded engagement feature is offset in the direction of the first axis by a second offset amount with respect to the backing plate plane; and the first offset amount is different to the second offset amount.

Optionally, the moulded engagement feature is in the form of: a moulded engagement feature of a first type which is configured to extend, in use, into the friction material; or a moulded engagement feature of a second type which is configured to receive, in use, the friction material.

Optionally, the moulded engagement feature of the first type comprises a protrusion which protrudes from the friction material mounting surface; and the moulded engagement feature of the second type comprises a recess which extends into, but not all the way through, the backing plate.

Optionally, the mould comprises a pressing plate; and the pressing plate comprises a pressing surface, the pressing surface comprising a complementary surface feature which is an inverse counterpart of the moulded engagement feature.

Optionally, forming the backing plate comprises pressing the pressing surface of the pressing plate into the composite backing plate precursor to mould the engagement feature into the friction material mounting surface.

Optionally, the method comprises: using a release agent during moulding to inhibit the composite backing plate precursor from sticking to the mould and to aid the backing plate to be released from the mould; and performing a soak treatment process on the backing plate using a solvent for removing the release agent that has migrated into the composite of the backing plate during moulding.

Optionally, the method comprises: subjecting the backing plate to a heating cycle to remove the solvent.

Optionally, the method comprises: performing a roughening process to increase the roughness of the friction material mounting surface.

Optionally, the method comprises: applying an adhesive layer onto the friction material mounting surface; and performing a drying process to dry the adhesive layer.

Optionally, the adhesive layer comprises a mixture of nitrile phenolic adhesive and water.

Optionally, the moulded engagement feature comprises a flat surface offset with respect to the backing plate plane in a direction perpendicular to the backing plate plane, wherein the flat surface is parallel to the backing plate plane.

Optionally, the friction material mounting surface defining the moulded engagement feature is part of the layer of extended reinforcement fibres, and extended reinforcement fibres of the layer of extended reinforcement fibres traverse between the moulded engagement feature and the remainder of the friction material mounting surface in a continuous manner.

According to a second aspect of the present disclosure, there is provided a composite backing plate for carrying a friction material to form a brake pad unit of a disc brake assembly, the composite backing plate comprising a first side and a second side spaced apart from one another along a first axis, wherein: the composite backing plate is formed from a composite material comprising reinforcement fibres, and the composite material is present throughout the entirety of the composite backing plate; the first side defines a brake mounting surface for engaging with a backing plate mounting structure of the disk brake assembly; the second side is a friction material mounting surface defining a moulded engagement feature which is moulded into the friction material mounting surface, wherein: the friction material mounting surface is defined by a layer of extended reinforcement fibres which extend from one side of the backing plate, in a continuous manner, to the opposite side of the backing plate; a first portion of the friction material mounting surface comprising the moulded engagement feature is offset in the direction of the first axis by a first offset amount with the respect to a backing plate plane, the backing plate plane being perpendicular to the first axis; a region of the friction material mounting surface excluding the moulded engagement feature is offset in the direction of the first axis by a second offset amount with the respect to the backing plate plane; and the first offset amount is different to the second offset amount.

Optionally, in the composite backing plate according to the second aspect, the moulded engagement feature is in the form of: a moulded engagement feature of a first type which is configured to extend, in use, into the friction material; or a moulded engagement feature of a second type which is configured to receive, in use, the friction material.

Optionally, in the composite backing plate according to the second aspect, the engagement feature of the first type comprises a protrusion which protrudes from the friction material mounting surface; and the engagement feature of the second type comprises a recess which extends into, but not all the way through, the backing plate.

Optionally, in the composite backing plate according to the second aspect, the friction material mounting surface defines a plurality of the moulded engagement features, wherein: at least one of the plurality of the moulded engagement features is of the first type; and/or at least one of the plurality of the moulded engagement features is of the second type.

Optionally, in the composite backing plate according to the second aspect, the friction material mounting surface defining the moulded engagement feature is part of the layer of extended reinforcement fibres, and extended reinforcement fibres of the layer of extended reinforcement fibres traverse between the moulded engagement feature and the remainder of the friction material mounting surface in a continuous manner.

Optionally, in the composite backing plate according to the second aspect, the friction material mounting surface is covered by an adhesive layer, wherein the adhesive layer is for bonding a friction material onto the friction material mounting surface.

Optionally, in the composite backing plate according to the second aspect, the moulded engagement feature comprises a flat surface offset by the first offset amount with respect to the backing plate plane in a direction perpendicular to the backing plate plane, wherein the flat surface is parallel to the backing plate plane.

According to a third aspect of the present disclosure, there is provided brake pad unit for a disc brake assembly, the brake pad unit comprising the composite backing plate according to the second aspect, and a friction pad, wherein: the friction pad comprises a friction material bonded to the friction material mounting surface; and the friction pad comprises a counterpart feature which is an inverse counterpart of the moulded engagement feature and engages with the moulded engagement feature.

### Brief Description of the Drawings

Examples of the present disclosure will now be described with reference to the accompanying drawings, in which:
Figure 1 is a flow diagram illustrating a method of manufacturing a backing plate, according to examples;
Figure 2A is a schematic perspective view of a first backing plate, according to examples;
Figure 2B is a schematic plan view of the first backing plate, according to examples;
Figure 2C is a schematic side cross-sectional view of the first backing plate, according to example;
Figure 2D is a schematic side cross-sectional view of the first backing plate and a friction pad, according to examples; Figure 3A is a schematic perspective view of a second backing plate, according to examples;
Figure 3B is a schematic plan view of the second backing plate, according to examples;
Figure 3C is a schematic side cross-sectional view of the second backing plate, according to example;
Figure 4A is a schematic perspective view of a third backing plate, according to examples;
Figure 4B is a schematic plan view of the third backing plate, according to examples;
Figure 4C is a schematic side cross-sectional view of the third backing plate, according to example;
Figure 5 is a schematic side view of a mould, according to examples;
Figure 6 is a schematic plan view of a first fibre layer, according to examples;
Figure 7 is a schematic perspective view of a first example of the first fibre layer, according to examples;
Figure 8 is a schematic perspective view of a second example of the first fibre layer, according to examples;
Figure 9 is a schematic plan view of a second fibre layer, according to examples;
Figure 10 is a schematic perspective view of a first example of the second fibre layer, according to examples;
Figure 11 is a schematic perspective view of a second example of the second fibre layer, according to examples;
Figure 12 is a schematic plan view of a third fibre layer, according to examples;
Figure 13 is a schematic perspective view of the third fibre layer, according to examples;
Figure 14 is a schematic perspective exploded view of a first brake pad unit, according to examples;
Figure 15 is a schematic perspective view of the first brake pad unit, according to examples; Figure 16 is a schematic perspective view of a second brake pad unit, according to examples; and
Figure 17 is a schematic perspective view of the third backing plate showing example extended reinforcement fibres, according to examples.

### Detailed Description

The present disclosure relates to a method of manufacturing a backing plate for a disc brake assembly, a composite backing plate and a brake pad unit comprising the composite backing plate. The backing plate according to the present disclosure may, in use, form part of a brake pad unit for a disc brake assembly. The disc brake assembly may be for use in an automobile or other vehicle, for example.

Those skilled in the art will appreciate that a disc brake assembly typically comprises at least one rotor, which rotates in correspondence with a wheel on which the disc brake assembly is deployed. The backing plate of the disc brake assembly supports friction material. The friction material contacts the rotor during braking. Contact with the friction material causes the rotation of the rotor to be inhibited by the action of friction. For example, the kinetic energy of the vehicle is absorbed as heat in the friction material and dissipates as sound, for example.

The backing plate may be engaged with a backing plate mounting structure of the disc brake assembly. For example, the backing plate mounting structure is a caliper assembly configured to urge the brake pad unit towards the rotor in order for braking to be applied. For example, the caliper may be hydraulically or electrically actuated. Further details of disc brake assemblies are not discussed herein and will be known to the skilled person.

The brake pad unit according to the present disclosure may be retrofittable to existing disc brake assemblies, and be used with conventional disc brake assembly designs, including, but not limited to, regenerative braking systems. The brake pad unit may be assembled together with other common features of disc brake assemblies, for example, wear sensors to monitor the remaining lifetime of the unit.

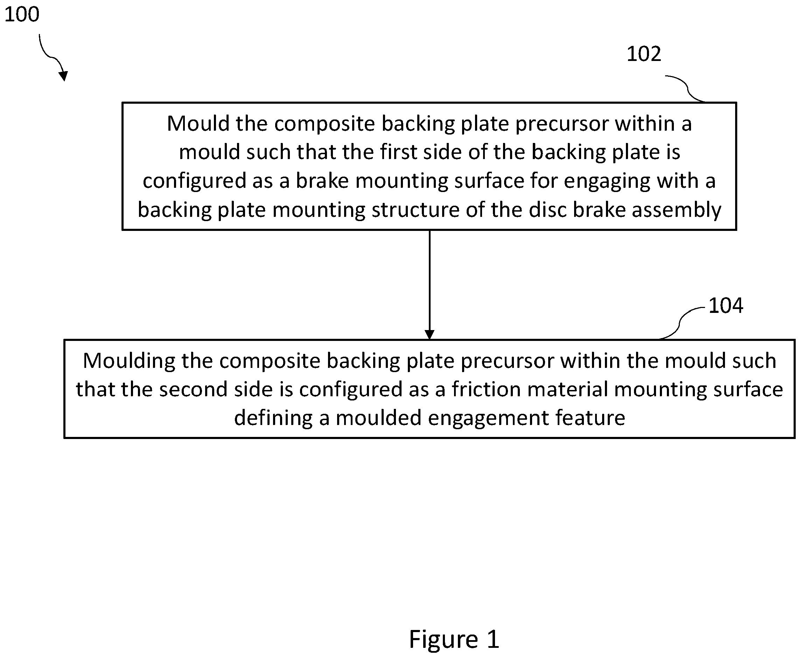

Figure 1 is a flow diagram illustrating a method 100 of manufacturing a backing plate for a disc brake assembly. The method 100 comprises forming the backing plate from a composite backing plate precursor such that the backing plate comprises a first side and a second side spaced apart from one another along a first axis. For example, the first axis is the thickness axis of the backing plate. In other words, the thickness of the backing plate is along the first axis. The first axis is hereafter referred to as the thickness axis for simplicity.

The flow diagram of Figure 1 illustrates what is involved in forming the backing plate according to the method 100. It should be noted that the Figure 1 illustrates various aspects of the method 100 and does not necessitate a particular order for the disclosed operations.

At block 102 of the method 100, the composite backing plate precursor is moulded within a mould such that the first side of the backing plate is configured as a brake mounting surface for engaging with a backing plate mounting structure of the disc brake assembly. At block 104 of the method 100, the composite backing plate precursor material is moulded within the mould such that the second side is configured as a friction material mounting surface. The moulding performed at block 104 comprises moulding an engagement feature into the friction material mounting surface defining a moulded engagement feature. Certain process blocks may be performed concurrently. Certain process blocks may be performed sequentially. Certain process blocks may be performed in an order different to that which is herein discussed. For example, the moulding described as part of blocks 102 and 104 may be performed at the same time as the composite backing plate precursor is being moulded within the mould.

The moulded engagement feature is moulded during formation of the backing plate. In other words, the friction material mounting surface is moulded, within the mould, so as to define the moulded engagement feature. In other words, the engagement feature is moulded into the friction material mounting surface. The moulded engagement feature may simply be referred to as the engagement feature for brevity. It should therefore be understood that when the "engagement feature" is referred to herein, said reference is to the engagement feature formed by means of moulding.

For example, moulding the engagement feature into the friction material mounting surface may preserve the structure within the layer of material on which the friction material mounting surface is defined. For example, moulding may preserve layer structure (e.g., the structure/arrangement of fibres within said layer) as opposed to forming structures by raking, cutting, drilling and the like. Advantageous effects of moulding the engagement feature are discussed further below.

The friction material mounting surface is defined by a layer of extended reinforcement fibres which extend from a first edge wall location on the backing plate to a second edge wall location on the backing plate, the edge wall being substantially parallel (within acceptable tolerances) to the thickness axis. In other words, the edge wall of the backing plate is substantially perpendicular to the first side, for example, as further described later. The composite backing plate may comprise one or more different composite layers. For example, when referring to the fibres of a particular layer as extending between location on the edge wall, it will be appreciated that said fibres would extend between location of the edge wall of the respective layer to which those fibres belong. Extended reinforcement fibres are discussed in more detail further below.

More specifically, at block 104, the friction material mounting surface is configured by means of moulding such that a first portion of the friction material mounting surface comprising the moulded engagement feature is offset in the direction of the first axis (i.e., the thickness axis) by a first offset amount with respect to a backing plate plane. The backing plate plane is a plane perpendicular to the thickness axis, as discussed in further detail below. In examples, a second portion of the friction material mounting surface excluding the engagement feature is offset in the direction of the thickness axis by a second offset amount with respect to the backing plate plane. In examples, the first offset amount is different to the second offset amount.

In some examples, the engagement feature is a protrusion extending from the portions of the friction material mounting surface excluding engagement features. In some examples, the engagement feature is a recess extending into, but not all the way through, the backing plate. The recess is, for example, a recess formed in the friction material mounting surface. The engagement feature provides a significant topological feature on the friction material mounting surface. Friction material may be moulded onto the disclosed backing plate such that the friction pad comprises a counterpart feature which is an inverse counterpart of the moulded engagement feature and engages with the moulded engagement feature. Such engagement provides that the backing plate and the resulting friction pad are interlocked in a manner that inhibits the friction pad from moving relative to the friction material mounting surface.

In examples, the friction material mounting surface comprises one or more engagement features. The engagement feature is for engaging with friction material mounted to the friction material mounting surface such that the backing plate and a friction pad formed by the friction material are better bonded to withstand shear forces. For example, a brake pad unit where the backing plate does not comprise one or more engagement features may not be able to withstand as high a shear force as a brake pad unit comprising the disclosed backing plate.

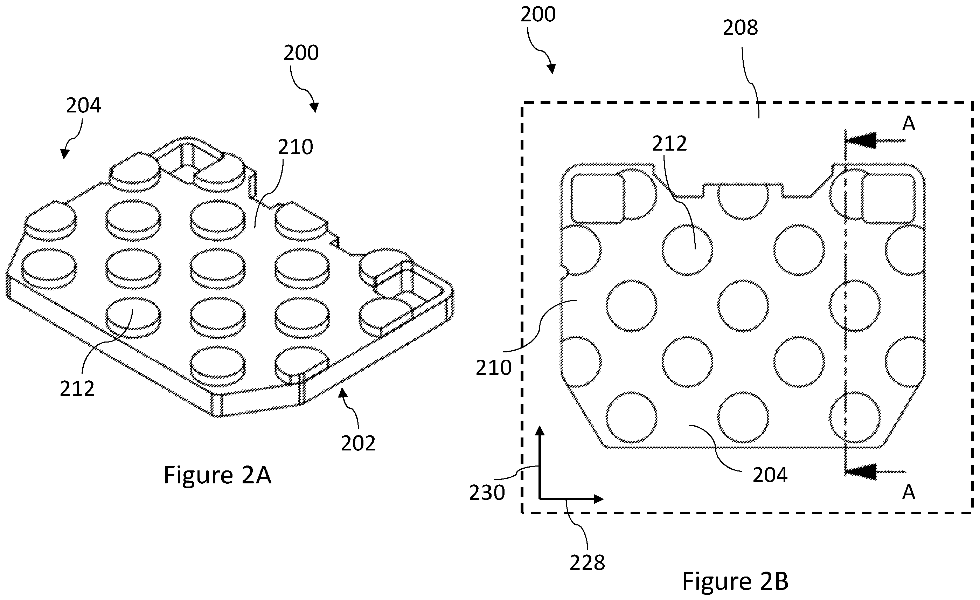

Examples of the structure of the backing plate achieved by performing the method 100 are shown in Figures 2A-2D, 3A-3C and 4A-4C, discussed in further detail further below. For example, performing the method 100 leads to the manufacture of a composite backing plate comprising a first side and a second side as described later.

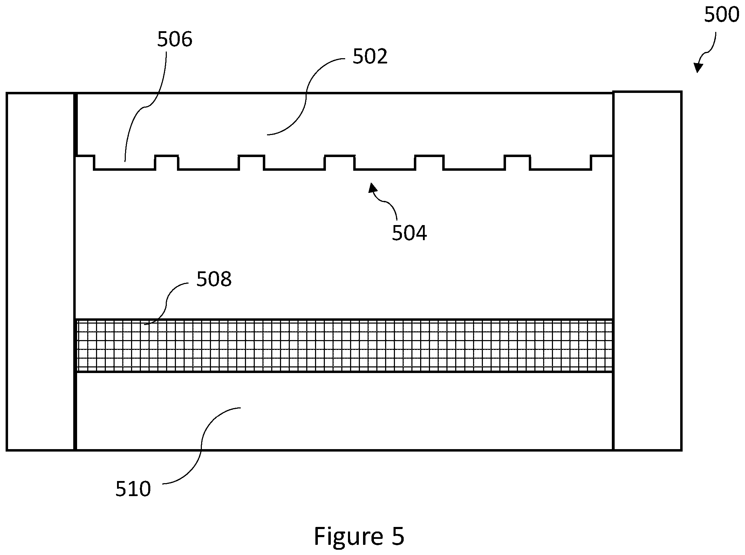

In the examples of Figure 1 and the method 100, more specific example processes which may form part of the method 100 will now be described. Figure 5 is a schematic cross-sectional side view of a mould 500, according to examples, which may be used to perform the described moulding. The mould 500 is a tool for moulding precursor materials in order to produce a desired article.

In these examples, the mould 500 comprises a pressing plate 502. The pressing plate 502 comprises a pressing surface 504. The pressing surface 504 comprises a complimentary surface feature 506 which is an inverse counterpart of the moulded engagement feature, according to any of the examples described herein. In the particular examples of Figure 5, there are a plurality of complimentary surface features 506 provided. For example, there are formed protrusions and/or recesses on the pressing surface 504 which define the complimentary surface features 506. It should be noted that the complimentary surface features 506 shown in Figure 5 are merely illustrative examples for the purpose of explanation and do not necessarily correspond to complementary features of the specific moulded engagement feature examples described herein.

For example, the method 100 further comprises arranging the composite backing plate precursor 508 within the mould 500. For brevity, the composite backing plate precursor 508 is hereafter referred to as the precursor 508. The precursor 508 is the material used to form the backing plate. The backing plate is formed from a composite material comprising reinforcement fibres, and the composite material is present throughout the entirety of the composite backing plate (for example, the backing plate does not comprise metal). The backing plate comprises reinforcement fibres and a polymer matrix, for example. For example, the backing plate may comprise a polymer matrix which comprises a resin and/or a polymer matrix which acts as a binder. In some examples, the polymer matrix is a resin from the phenol formaldehyde family of resins. In some examples, the polymer matrix is a resin from the Polyaryletherketon (PAEK) family of thermoplastic polymers. The precursor 508 may be in a form in which the polymer matrix is not yet cured, for example. Once the polymer matrix is cured, the described backing plate may be the result.

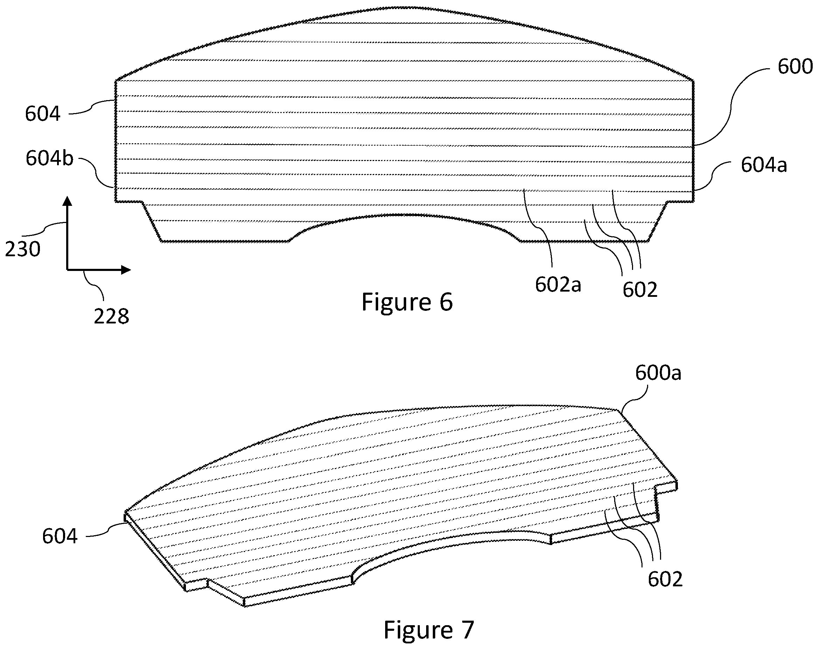

As discussed, the backing plate comprises an extended reinforcement fibre layer (discussed in further detail later - see Figures 6 to 11). The extended reinforcement fibre layer is a composite layer. For example, the precursor 508 comprises an arrangement of one or more material compositions and/or structures according the one or more composite layers desired to form part of the backing plate. The precursor 508 comprises an extended reinforcement fibre layer precursor, for example. The precursor for the extended fibre layer may be referred to as the extended fibre precursor.

For example, the extended fibre precursor for forming the extended reinforcement fibre layer may be a pre-impregnated fibre layer ("pre-preg"). Those skilled in the art will appreciate that pre-impregnated fibre layers may comprise fibres and a partially cured polymer matrix (e.g., comprising a resin and/or acting as a binder), and a pre-impregnated fibre layer is referred to as a B-Stage material. For example, a pre-impregnated fibre layer comprises a fabric of reinforcement fibres and a partially cured polymer matrix. In some examples, the extended fibre precursor may not be prepreg, and instead may be prepared in situ by depositing reinforcement fabric and introducing an uncured/partially cured polymer matrix to the fabric. It will be appreciated that to obtain the extended reinforcement fibre layer, the extended fibre precursor is to have a defined arrangement of fibres which are extended.

In some examples, the precursor 508 comprises the extended fibre precursor for forming the friction material mounting surface, in addition to precursors for one or more other layers. For example, the backing plate may comprise a plurality of composite material layers. In some examples, the backing plate may comprise more than one of the same type of composite material layer. In some examples, the backing plate comprises at least two different types of composite material layers.

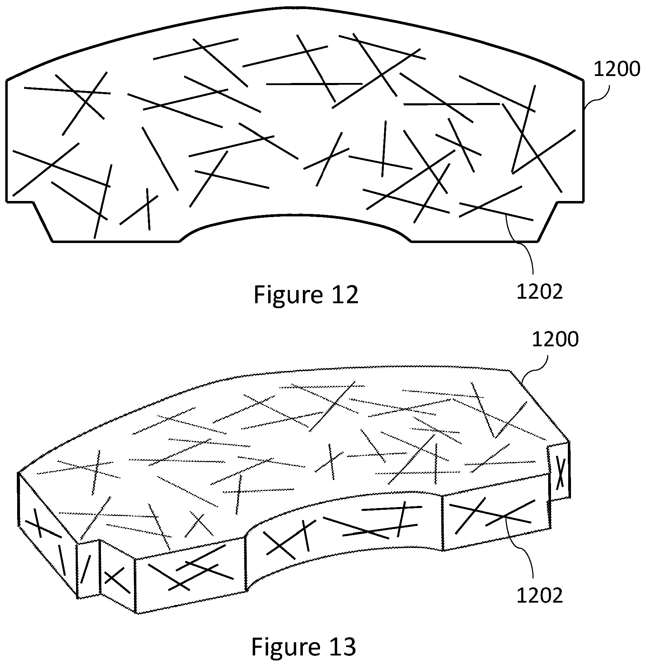

For example, the backing plate may comprise a layer of reinforcement fibres which do not extend between locations on the edge wall of the backing plate, once formed (discussed in more detail later - see Figures 12 and 13). For example, such a layer of reinforcement fibres may be referred to as a non-extended fibre layer, and the precursor for this layer may be referred to as the non-extended fibre precursor. For example, the non-extended fibre layer is a composite layer. In these examples, the nonextended fibre precursor also comprises a polymer matrix which comprises a resin and/or a polymer matrix which acts as a binder.

some examples, the overall precursor 508 may be arranged to define a plurality of layers. For example, it may be desired to have a non-extended fibre layer sandwiched between two extended reinforcement fibre layers. Any number and arrangement of such fibre layers may be used according to the desired structure, and the precursor 508 may be arranged accordingly. Some example layers comprised in the backing plate are described further below.

As described above, the method may comprise arranging the backing plate precursor 508 within the mould 500. In some examples, the mould 500 is located in a heated press set at a temperature high enough to induce flow in the polymer matrix comprised in the precursor 508. In some examples, the heated press comprises heated platens which provide the force to press the pressing plate 502. For example, once the mould 500 is arranged in the heated press, there may be a platen which contacts the pressing plate 502 and another platen which contacts a mould base 510 on which the precursor 508 is supported (the platens are not shown in Figure 5). In some examples where there are a plurality of different layer precursors for different layer as part of the backing plate precursor 508, the layer precursors may comprise the same polymer matrix or different polymer matrices that can be moulded and cured using the same conditions.

For example, the mould 500 is compacted (i.e., a force is exerted by the heated press to compress the mould) in order to compress the precursor 508 to provide flow in the polymer matrix. Also, the mould 500 is compacted in order to press the pressing surface 504 of the pressing plate 502 into the precursor 508 to mould the engagement features into the friction material mounting surface. In some examples, the compaction occurs once the precursor 508 has been thoroughly heated to the desired temperature. For example, once the precursor 508 has be thoroughly heated, it may be become possible for the polymer matrix to flow enough for the desired moulding to occur. The heated press may apply a suitable compressing force. For example, a suitable compressing force may be at least 2 tons per square inch or 31 Mega Pascals, for example. In other example, a different force may be applied which is suitable for the formation of the backing plate.

In these examples, inducing flow in the polymer matrix provides for the precursor 508 to take shape in accordance with the compacted mould 500. For example, heat supplied by the heated press also provides for the precursor 508 to take shape in accordance with the compacted mould 508. The compression and/or heat during this process may provide for the polymer matrix to be cured.

Any of the disclosed examples may further comprise a process of subjecting the arrangement to a post-curing heating profile involving being held at a first temperature. The post curing profile may comprise a schedule of repeatedly increasing the temperature and holding the condition at the higher temperature for a predetermined amount of time. For example, the moulded precursor 508 may be subjected to a postcuring heating profile involving being held at elevated temperature (for example minimum 3 hours at 150°C, but preferably 170°C or greater for 1 to 30 hours. Subjecting the backing plate to the post-curing heating profile may improve heat stability, for example. This post-curing cycle involves ramping up at various rates and then dwelling. The postcuring cycle may comprise controlled cooling.

In some examples, the method 100 may comprise using a release agent during moulding to inhibit the composite backing plate precursor 508 from sticking to the mould and to aid the backing plate to be released from the mould. For example, the release agent may be deployed such that the release agent is between the precursor 508 and the relevant inner surfaces of the mould 500. Advantageously, use of the release agent may avoid disrupting or damaging the desired moulded structure of the composite backing plate after the described moulding process when the backing plate is to be removed from the mould 500.

In some examples, the method 100 comprises performing a roughening process to increase the roughness of the friction material mounting surface 210. For example, the roughening process may be performed after the backing plate has been subjected to the post-curing heating profile. For example, the roughening process may involve subjecting the friction material mounting surface to grit blasting, sand blasting, glass blasting, or the like. There may be adhesive (as described later) between the friction material and the friction material mounting surface to bond the friction pad (formed by the friction material) to the friction material mounting surface. Roughening the friction material mounting surface provides a rougher surface with a greater surface area for such adhesive to form a stronger bond, for example.

In some examples, the method 100 further comprises performing a soak treatment process on the backing plate using a solvent. The soak treatment may be for to removing release agent that has migrated into the composite material of the backing plate during the described moulding process. In some examples where a roughening process is performed as described, the soak treatment may also serve to remove particles of the composite and other material left over from performing the roughening process. In some examples, the solvent is propanol, isopropanol, methanol, toluene, acetone or the like. In some examples, it may be desirable to remove the solvent from the composite backing plate. In these examples, the backing plate may be subjected to a heating cycle to remove the solvent. The temperature to which the backing plate is raised may depend on the boiling point of the solvent used, for example. As one particular example, the backing plate may be heated in an oven at a temperature of 80°C for a given amount of time to ensure evaporation of the solvent in question. For example, the given amount of time may be around one hour.

In some examples, the method 100 comprises applying an adhesive layer onto the friction material mounting surface. Accordingly, there may be provided a backing plate where the friction material mounting surface is covered by an adhesive layer, wherein the adhesive layer is for bonding a friction material onto the friction material mounting surface. For example, the adhesive layer may comprise a mixture of nitrile phenolic adhesive and water. In some examples, the adhesive layer comprises a mixture of nitrile phenolic adhesive, water and phenolic novolac. In some such examples, the adhesive layer comprises a mixture of 66% Nitril Phenolic adhesive, 24% water and 10% phenolic novolac. The proportions of these constituents may be varied depending on the desired characteristics of the adhesive. In some examples, the phenolic novolac is introduced to the mixture for the adhesive in powder form. In general, any suitable glue which can withstand high temperatures of the kind which the backing plate is to be subjected to during use may be used which achieves a strong enough bond between the friction pad and the backing plate (e.g., to meet relevant standards). For example, a glue may be used which delivers good bond integrity at high temperature of 350°C or more. For example, the glue may be chosen according to the material of the backing plate and/or the friction material. In examples where the backing plate and/or the friction material is phenolic resin based, a glue may be chosen that is compatible with phenolic resins, for example.

In some examples, the method 100 also comprises performing a drying process to dry the adhesive layer. For example, heat is applied for a given length of time to the adhesive layer. As one specific example, the adhesive layer may be kept at a temperature of 80°C for said given length of time. The temperature may depend on the adhesive mixture used. The said given length of time may be 40 minutes to an hour, for example, depending on the adhesive mixture used.

In some examples, the backing plate manufactured according to any example of the above-described methods may be provided for friction material to be mounted thereon. In some examples, friction material may be moulded onto the backing plate to form the friction pad. Accordingly, there may be provided a brake pad unit comprising a composite backing plate according to any of the examples described herein, wherein the friction pad comprises a friction material bonded to the friction material mounting surface, and the friction pad comprises a counterpart feature which is an inverse counterpart of the moulded engagement feature and engages with the moulded engagement feature.

Those skilled in the art will appreciate that friction material may typically be moulded onto conventional backing plates. Accordingly, the composite backing plates disclosed herein may be used in conventional processes for attaching friction pads, thereby avoiding certain monetary and other resource costs of replacing conventional backing plates (e.g., stamped steel backing plates) with the backing plates disclosed herein. At the same time, the disclosed engagement features formed in the extended reinforcement fibre layer provide for the desired mechanical characteristics such as shear strength.

For example, a method of mounting the friction material onto the friction material mounting surface may comprise forming a friction pad by moulding the friction material (as friction pad pre-cursor) onto the backing plate. For example, the starting point may be a manufactured backing plate according to the described examples, with a layer of dried adhesive on the friction material mounting surface. For example, the backing plate may be placed in a mould tool for moulding on the friction material (hereafter referred to as the friction material mould tool). The friction material may be introduced such that it is positioned on the adhesive layer applied to the friction material mounting surface in the friction material mould tool. Compression, and optionally heat, may then be applied in order to mould the friction material and to cure the adhesive layer, thereby forming the friction pad bonded to the friction material mounting surface by the adhesive layer.

In some examples, the friction material comprises carbon. In some examples, the friction material comprises a polymer matrix. In some examples, the friction material comprises a particulate powder. In some examples, the friction material is a phenolic resin-based friction material.

For example, when the friction material is moulded onto the friction material mounting surface with engagement features, a friction pad may be formed which has structures that interlock and engage with the described engagement features, as discussed above. Advantageously, this provides for better resilience to shear force. In some examples, the shear strength of the resulting brake pad unit is greater than 4.5 Mega Pascals. In some examples, the shear strength of the resulting brake pad unit is greater than 9 Mega Pascals. The methods described herein may provide brake pad units comprising composite backing plates which meet various shear strength standards, as appropriate, for example.

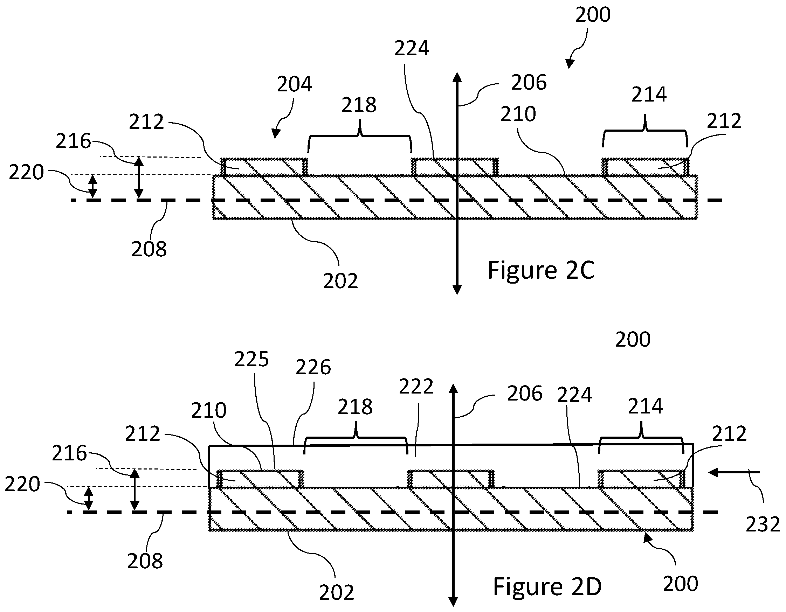

Examples of the structure of the composite backing plate manufactured by implementing examples of the above-described methods will now be described. Figures 2A to 2C relate to specific examples 200 of the backing plate. The examples of the backing plate shown in Figures 2A to 2C are labelled with the numeral 200. Figure 2A is a schematic perspective view of the first backing plate 200, Figure 2B is a schematic plan view of the first backing plate 200, and Figure 2C is a schematic side cross-sectional view of the first backing plate 200, according to specific examples. The cross-section shown in Figure 2C is taken along the line A-A indicated in Figure 2B.

The backing plate may be flat. For example, the first backing plate 200 has the general form of a sheet and is generally planar (i.e., the first backing plate 200 largely exists within a plane and its thickness is significantly smaller than its extension within the plane). For example, said plane is perpendicular to the thickness axis.

In these examples, the first backing plate 200 comprises the first side 202 and the second side 204. The first side 202 and the second side 204 provide surfaces on opposite sides of the first backing plate 200. The thickness axis is indicated by the double-sided arrow labelled with numeral 206 in Figure 2C. As can be seen from Figure 2C, the first side 202 is spaced apart from the second side 204 with respect to the thickness axis 206.

The previously described backing plate plane is a plane that is perpendicular to the thickness axis 206. In the orientation of Figure 2C, the backing plate plane extends into and out of the page, and left and right with respect to the schematic shown, for example. The backing plate plane is indicated using the numeral 208. The backing plate plane 208 does not extend along the thickness axis 206. Referring to the plan view of the first backing plate 200 shown in Figure 2B, the backing plate plane 208 is oriented to lie on the page such that it extends from left to right, and up and down, but does not extend in the direction into the page or out of the page. The backing plate plane 208 is a hypothetical plane which may be used to describe the positions and orientations of various features. The position of the backing plate plane 208 along the thickness axis may be any position, and may be arbitrary for the purpose of this description.

In these examples, the second side 204 is configured as the friction material mounting surface 210. The friction material mounting surface 210 defines a moulded engagement feature 212, for example. In the examples of Figure 2A to 2C, the first backing plate 200 comprises a plurality of engagement features. In examples, the backing plate according to the present disclosure may comprise one or more moulded engagement features defined by the friction material mounting surface. For simplicity, the following description is in the context of the examples of Figures 2A to 2C in which the numeral 212 is used to collectively indicate all the engagement features.

In Figure 2C, a part of the first portion 214 of the friction material mounting surface 210 defining the moulded engagement features 212, which is offset in the direction of the thickness axis 206 by the first offset amount 216 with respect to the backing plate plane 208, is indicated. In these examples, all the engagement features 212 similar to one another and the first portion 214 includes all the engagement features 212. However, in Figure 2C, a part of the first portion 214 including one engagement feature 212 is labelled for simplicity of depiction. Also, in Figure 2C, a part of the second portion 218 of the friction material mounting surface 210 excluding any engagement feature 212 is indicated. In these examples, the second portion 218 includes all parts of the friction material mounting surface 210 where there is no engagement feature.

In these examples, the second portion 218 is offset in the direction of the thickness axis 206 by the second offset amount 220 with respect to the backing plate plane 208 as indicated in Figure 2C. In these examples, the first offset amount 216 is greater than the second offset amount 220. Accordingly, there is defined a patterned or textured surface on the friction material mounting surface.

In some examples, there is provided a moulded engagement feature of a first type which is configured to extend, in use, into the friction material. For example, the first type of engagement feature may comprise a protrusion which protrudes from the friction material mounting surface 210. In some examples, such as those of Figures 2A to 2C, the moulded engagement features 212 are all in the form of protrusions (for example, see the perspective view of Figure 2A). The moulded engagement features 212 shown in Figures 2A to 2C are examples of the first type. For example, when the friction material is mounted onto the friction material mounting surface 210, engagement features of the first type extend into the friction material as if penetrating the friction material.

Figure 2D is a schematic side cross sectional view of the first backing plate 200 where the friction material mounting surface 210 has friction pad 222 (composed of the friction material) mounted thereon. For example, Figure 3D illustrates examples of a brake pad unit according to this disclosure. For example, the friction pad 222 may have a proximal side 224 and a distal side 226 when mounted onto the backing plate. The proximal side 224 is the side closest to the backing plate, and the distal side 226 is the opposite side farthest from the backing plate. Engagement features of the first type extend into the friction pad 222 such that the engagement features are closer to the distal side 226 than the parts of the proximal side 226 closest to the backing plate. For example, the friction pad 222 has counterpart features which are inverse counterparts of the moulded engagement features and engage with the moulded engagement features. For example, the backing plate interlocks with the friction pad by virtue of the engagement features. This interlocking improves resilience to a shear force, for example in a direction indicated by arrow 232.

Alternatively, or in addition, there may be one or more engagement features that are of a second type which is configured to receive, in use, the friction material. For example, the second type of engagement feature may comprise a recess which extends into, but not all the way through, the backing plate. In some examples, the friction material mounting surface defines a plurality of the moulded engagement features, wherein at least one of the plurality of moulded engagement features is of the first type, and/or at least one of the plurality of the moulded engagement features is of the second type.

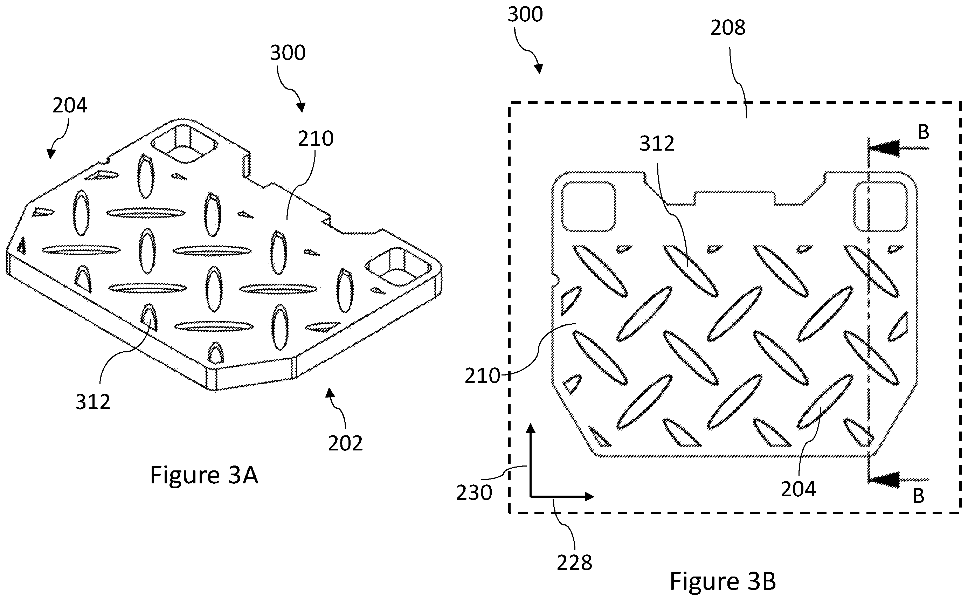

Figure 3A is a schematic perspective view of a second backing plate 300, according to examples. Figure 3B is a schematic plan view of the baking plate 300 according to examples. The example second backing plate 300 is different to the example first backing plate 200 in that the second backing plate 300 comprises a plurality of moulded engagement features 312 of the second type instead of the first type. Other features are similar to that of the example first backing plate 200 and are indicated using the same reference numerals as used in Figures 2A to 2D.

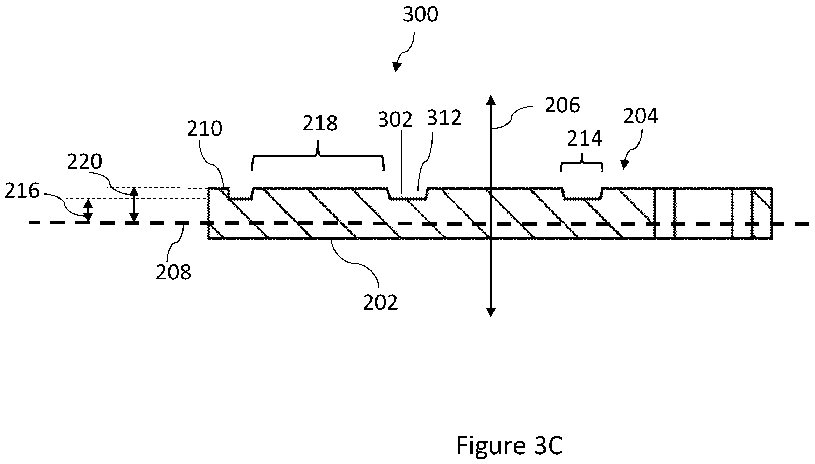

Figure 3C is a schematic side cross-sectional view of the second backing plate 300 taken along the line B-B indicated in Figure 3B. In these examples, the second portion 218, which excludes engagement features, is elevated (in the orientation of Figure 3C) compared to the moulded engagement features 312 of the second type. In contrast, in the examples of Figure 2C, the moulded engagement features 212 of the first type are elevated (in the orientation of Figure 2C) compared to the second portion 218 which excludes engagement features. As shown, the engagement features 312 do not extend all the way to the first side 202 of the backing plate. In examples, the friction material is received in the engagement features 312 of the second type. For example, there may be a friction pad similarly to as shown in Figure 2D mounted onto the second backing plate 300 (not shown in Figure 3C) to form a brake pad unit.

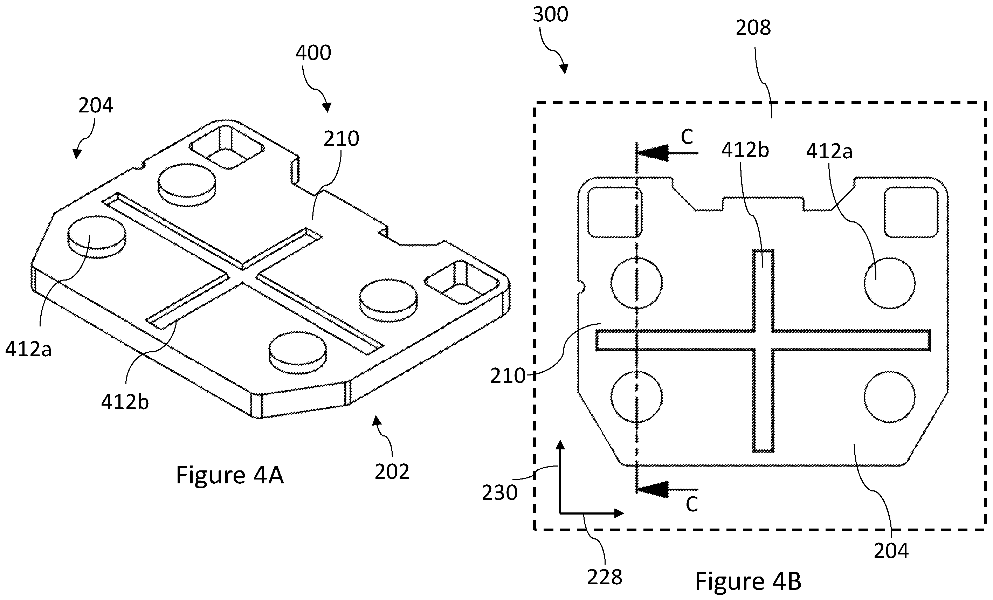

As described above, there may be provided a backing plate which has a combination of engagement features of the first and second types. Figure 4A is a schematic perspective view of a third backing plate 400, according to examples. The third backing plate 400 of Figure 4A is different in terms of its moulded engagement features as compared to the described first backing plate 200 of Figures 2A to 2D and the described second backing plate 300 of Figures 3A to 3C. Figure 4B is a schematic plan view of the third backing plate 400, according to examples. In these examples, the third backing plate 400 comprises a first set of moulded engagement features 412a and a second set of moulded engagement features 412b. The first set of moulded engagement features 412a comprises engagement features 412a of the first type (in these examples, protrusions). In these examples, the second set of engagement features 412b comprises an engagement feature 412b of the second type. There is provided the first portion 214 which, in these examples, is the portion of the friction material mounting surface 210 defining the first set of engagement features 412a. There is provided the second portion 218, which is the portion of the friction material mounting surface 210 excluding any engagement feature. In these examples, the first offset amount 216 is greater than the second offset amount 220.

In these examples, there is provided a third portion 402 of the friction material mounting surface 210 comprising the second set of engagement features 412b. In such examples, either of the portion comprising the first set of engagement features 412a and the portion of the second set of engagement features 412b may be referred to as the "first portion", while the other of the portions comprising engagement features is referred to as the "third portion".

In these examples, the third portion 402 of the friction material mounting surface 210 is offset in the direction of the thickness direction by a third amount 404 with respect to the backing plate plane 208, the third amount 404 being different to the first amount 216 and different to the second amount 220. In these examples, the third amount 404 is less than the first amount 216 and less than the second amount 220.

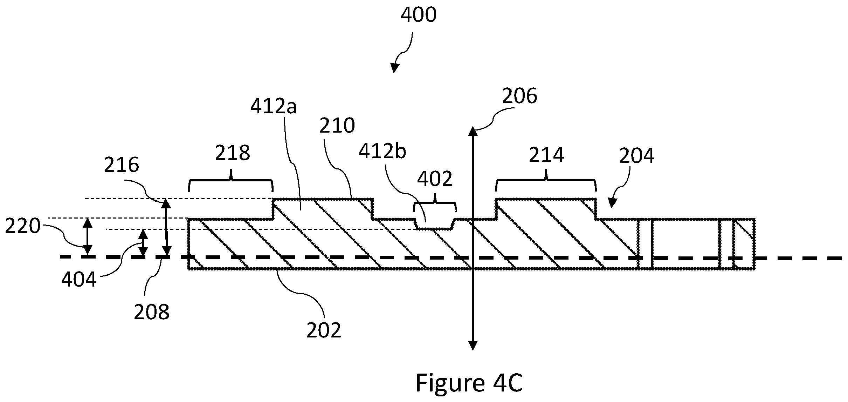

For example, there may be a friction pad similarly to as shown in Figure 2D mounted onto the third backing plate 400 (not shown in Figure 4C) to form a brake pad unit.

Engagement features according to any example function to interlock and engage the friction pad when mounted onto the friction material mounting surface so as to improve resilience to shear force. In addition, advantageously, the engagement features increase the surface area for bonding to the friction pad, thereby improving the bond strength between the backing plate and the friction pad.

Various examples of the moulded engagement feature are described above. However, it should be noted that these are simply specific examples and the shapes of engagement features either of the first type or the second type are not limited to these specific examples. For example, the engagement features of the first type shown in Figures 2A to 2D and Figures 4A to 4C have a circular cross-section as viewed in plan view. However, in other examples, engagement feature of the first type may have a different shape (e.g., rectangular, triangular, hexagonal, or any other shape which may be moulded into the second side 204 using the methods described herein). In some examples, the moulded engagement feature comprises a flat surface, offset with respect to the backing plate plane 208 in a direction perpendicular to the backing plate plane (e.g., in the thickness direction), wherein the flat surface is parallel to the backing plate plane. For example, the first backing plate 200 of Figures 2A to 2D comprises the engagement features 212 with a top surface 225 which is offset from and parallel to the backing plate plane 208. For example, the second backing plate 300 of Figures 3A to 3C comprises the engagement features 312 with a surface 302 at the bottom of the recess defining said engagement features 312 which is parallel to the backing plate plane 208. Similarly, as can be seen for example from Figure 4C, the third backing plate 400 of Figures 4A to 4C comprises flat surfaces parallel to the backing plate plane 208 as part of the respective engagement features.

In some examples, there are provided engagement features which do not comprise a flat surface parallel to the backing plate plane 208. For example, in cross sections such as those shown in Figures 2C, 3C and 4C, the engagement features may have a curved shape in cross-section (e.g., the engagement features may be rounded bumps moulded onto the friction material mounting surface 210), a triangular shape, or another shape not providing a flat surface parallel to the backing plate plane 208.

As previously described, the friction material mounting surface 210 is defined by a layer of extended reinforcement fibres. For example, the extended reinforcement fibres may extend across the entirety of the backing plate in a plane not parallel with the thickness axis. For example, in cartesian coordinates, there may be considered to be a second axis 228 perpendicular to the thickness axis and a third axis 230 perpendicular to the thickness axis (see Figures 2B, 3B and 4B). While the backing plate may be of any suitable shape (e.g., for use in a disc brake assembly), for simplicity of explanation, the second axis may be referred to as the length axis and the third axis may be referred to as the width axis.

In these examples, the extended reinforcement fibres are extended in the sense that the fibres extend the entire span of the backing plate along the length and/or the width axis. As previously described, the extended reinforcement fibres extend from a first edge wall location to a second edge wall location on the backing plate. The position of the extended reinforcement fibres with respect to the thickness axis may also vary as a function of position along the length and/or the width axis.

For ease of reference in the following description, the extended reinforcement fibre layer which forms the friction material mounting surface may be referred to as the friction mounting extended fibre layer. The extended reinforcement fibres may define various different patterns. In some examples, the extended reinforcement fibres may all be aligned with one another such that the layer of the extended reinforcement fibres may be compared to a layer of fabric in the which the fibres run in the same direction. For example, the extended reinforcement fibres may all be aligned in the length direction, the width direction, or in a direction along which the values of both the length and width axes vary.

Figure 6 is a schematic plan view of examples 600 of the friction mounting extended fibre layer (which is the specific extended reinforcement fibre layer comprising engagement features onto which the friction material is to be mounted). In these examples, the extended reinforcement fibres 602 extend between different locations on the edge wall 604. The edge wall 604 of the first friction material extended fibre layer 600 is part of the described edge wall of the backing plate. In these examples, the extended reinforcement fibres 602 extend across the whole of the backing plate in the sense that the fibre span the entire length (along the length axis 228) of the backing plate.

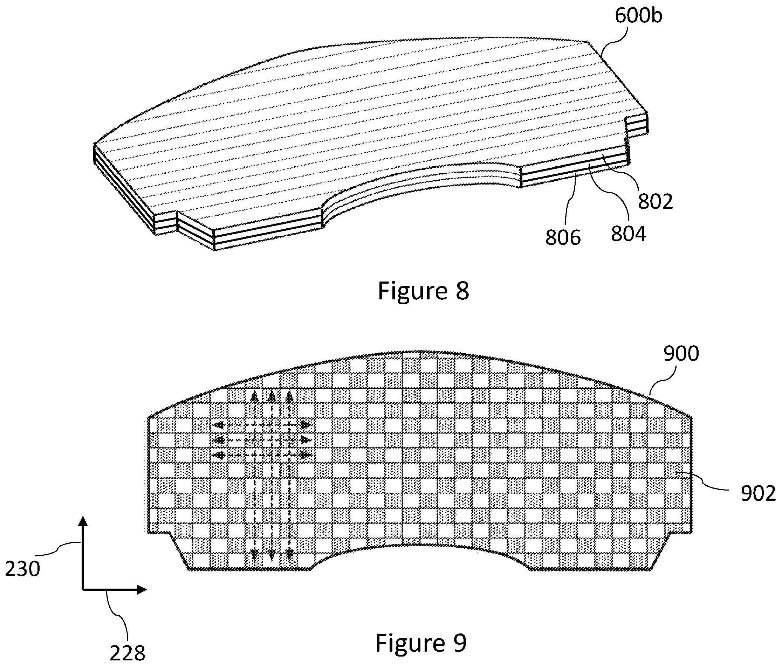

For example, the extended reinforcement fibres 602 comprise a first extended reinforcement fibre 602a extended from a first location 604a on the edge wall 604 to a second location 604b on the edge wall 604. In these examples, all the fibres are aligned in the same direction and lengthwise. The friction mounting extended fibre layer 600 may comprise one or more sublayers. For example, each sublayer may comprise a set of extended reinforcement fibres arranged in a particular alignment. Figure 7 is a schematic perspective view of a first example 600a of the friction mounting extended fibre layer 600 comprising one sublayer of fibres extended lengthwise. Figure 8 is a schematic perspective view of a second example 600b of the friction mounting extending fibre layer 600 comprising a plurality of sublayers 802, 804, 806 of extended fibres aligned in the same direction.

In some examples, the friction mounting extended fibre layer (which forms the friction material mounting surface) comprises a first set of extended reinforcement fibres extending in a first direction, and a second set of extended reinforcement fibres extending in a second direction different to the first direction. In some examples, the first and second directions may generally be substantially orthogonal. For example, the first and second set of fibres may be woven together.

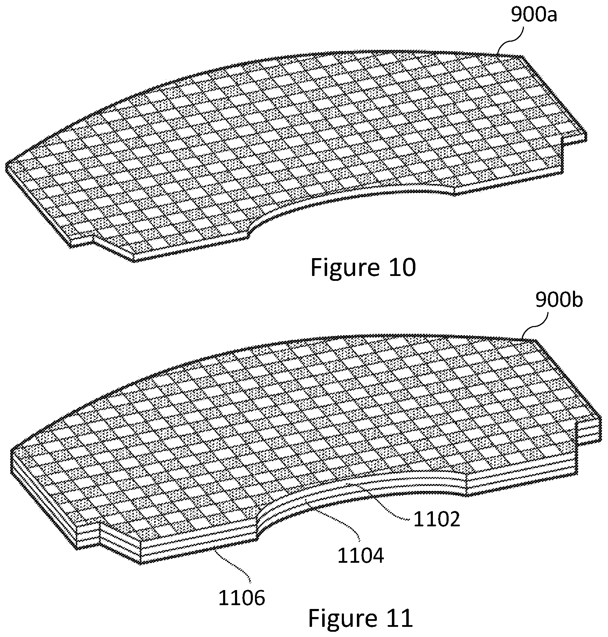

Figure 9 is a schematic plan view of examples 900 of the friction mounting extended fibre layer. In these examples, the second friction mounting extended fibre layer 900 comprises extended fibres 902 woven into a fabric. Figure 10 is a schematic perspective view of a first example 900a of the friction mounting extended fibre layer 900 comprising one sublayer of woven fibres. Figure 11 is a schematic perspective view of a second example 900b of the friction mounting extending fibre layer 900 comprising a plurality of sublayers 1102, 1104, 1106 woven fibres. In the examples of woven fibres, the fibres extend between two locations on the edge wall.

It should be noted that for simplicity of depiction, engagement features are not shown in Figures 6 to 11.

For example, extended reinforcement fibres are in contrast to fibres of length shorter than the shortest dimension of the backing plate. For example, fibres shorter than the width of the backing plate (distance along the width axis spanned by the backing plate) are not considered to be extended reinforcement fibres. For example, the extended reinforcement fibres are in contrast to fibres which terminate within the backing plate at a location not on the edge wall of the backing plate.

As discussed above, the backing plate may comprise a non-extended fibre layer. Figure 12 is a schematic plan view of a non-extended fibre layer 1200 comprising nonextended fibres 1202, according to examples. Figure 13 is a schematic perspective view of the non-extended fibre layer 1200, according to examples. It will be appreciated that the non-extended fibre precursor comprises shorter fibres and has a less well-defined structure than the extended fibre precursor. For example, the non-extended fibre precursor does not comprise fabric and instead comprises shorter fibres distributed within the non-extended fibre precursor in various orientations. For example, the fibres in the non-extended fibre layer may be randomly oriented. For example, the nonextended fibre layer may be formed using a composite material containing reinforcement fibres which are short enough such that said composite material can be moulded into various different shapes. Due to the non-structured nature of the non-extended fibre precursor, it may be considered more mouldable, and may be referred to as a moulding compound. The fibres in the moulding compound may also be referred to as discontinuous due to their shorter length, as those skilled in the art will appreciate (e.g., in addition to being referred to as non-extended). However, it will be appreciated that "discontinuous" does not refer to a broken fibre; the fibre itself still proceeds in a continuous manner end to end, but is referred to as discontinuous in the sense that the fibre does not continuously extend from one side of the layer in which it is comprised to the opposite side, for example.

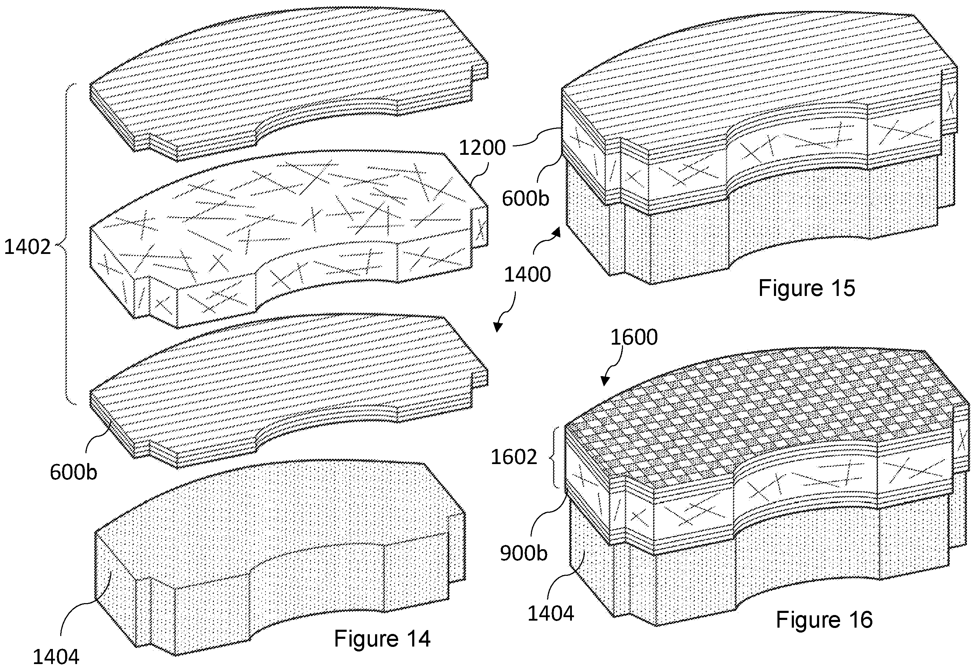

As previously described, the backing plate may comprise a plurality of composite material layers. In some examples, the backing plate may have a non-extended fibre layer sandwiched between two extended reinforcement fibre layers. For the purpose of illustration, Figure 14 is a schematic perspective exploded view of a first example brake pad unit 1400 according to examples, and Figure 15 is a schematic perspective view of the first example brake pad unit 1400. In these examples, the backing plate 1402 comprises the non-extended fibre layer 1200 sandwiched between two extended reinforcement fibre layers. In these exampled the extended reinforcement fibres are all aligned in the same direction. There is shown the friction mounting extended fibre layer 600b which has the friction pad 1404 mounted thereon (engagement features not shown). Figure 16 is a schematic perspective view of a second example brake pad unit 1600 in which the extended fibre layers of the backing plate 1602 comprise woven fibres. It should be noted that engagement features and the corresponding features which would be formed in the friction pad are not shown for simplicity. Note that, in these examples, the extended fibre layers adjacent the friction pad 1404 are the friction mounting extended fibre layers 600b, 900b comprising engagement features.

As discussed, the backing plate comprises the extended reinforcement fibre layer on which the engagement features are defined. In some examples, the extended reinforcement fibres of the extended reinforcement fibre layer comprising the engagement features traverse between the moulded engagement features and the remainder of the friction material mounting surface in a continuous manner. In other words, when the engagement features are moulded into the friction material mounting surface, its extended reinforcement fibres are not broken by the moulding. The extended fibres may simply bend as needed so as to be moulded as part of the engagement features of which they form a part. For example, the extended fibre continue unbroken between the described first and/or third portions defining the moulded engagement features and the second portion which excludes engagement features.

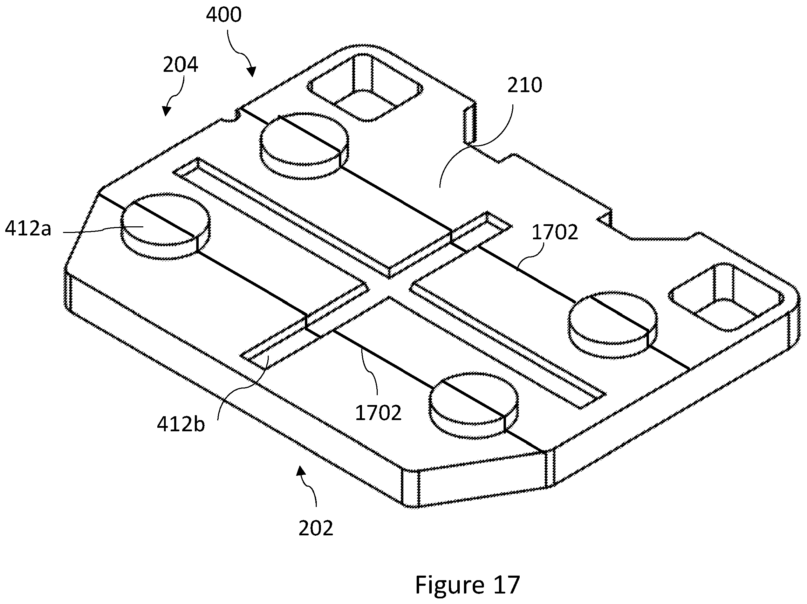

Figure 17 is a schematic perspective view of the third backing plate 400, according to examples. In Figure 17, there are shown extended fibres 1702 which traverse in a continuous manner (unbroken) between the engagement features and the remaining regions of the friction material mounting surface 210, for example.

Advantageously, maintaining continuous extended fibres in the friction material mounting surface may provide good structural strength. For example, the structural strength of the backing plate is not compromised by fibres being broken during the moulding process. This is an advantage of using the described moulding methods to produce engagement features as opposed to raking or scratching techniques for example.

## Claims

1. A method of manufacturing a backing plate (200, 300, 400) for carrying a friction material (222) to form a brake pad unit of a disc brake assembly, the method comprising: forming a backing plate (200, 300, 400) from a composite backing plate precursor (508) such that the backing plate comprises a first side (202) and a second side (204) spaced apart from one another along a first axis (206), wherein forming the backing plate (200, 300, 400) comprises: arranging the composite backing plate precursor (508) in a mould (500); locating the mould (500) in a heated press set at a temperature high enough to induce flow in a polymer matrix comprised in the composite backing plate precursor (508);and compacting the mould (500) to compress the composite backing plate precursor (508) to provide flow in the polymer matrix; such that the first side (202) of the backing plate is configured as a brake mounting surface for engaging with a backing plate mounting structure of the disc brake assembly; and the second side (204) is configured as a friction material mounting surface (210) defining a moulded engagement feature (212, 312, 412a, 412b); wherein the friction material mounting surface (210) is defined by a layer (600) of extended reinforcement fibres (602) which extend from one side of the backing plate, in a continuous manner, to the opposite side of the backing plate; a first portion (214) of the friction material mounting surface comprising the moulded engagement feature (212, 312, 412a, 412b) is offset in the direction of the first axis (206) by a first offset amount (216) with the respect to a backing plate plane (208), the backing plate plane (208) being perpendicular to the first axis (206); a second portion (218) of the friction material mounting surface excluding the moulded engagement feature (212, 312, 412a, 412b) is offset in the direction of the first axis (206) by a second offset amount (220) with respect to the backing plate plane (208); and the first offset amount (216) is different to the second offset amount (220).

2. The method according to claim 1, wherein the moulded engagement feature (212, 312, 412a, 412b) is in the form of: a moulded engagement feature of a first type (212, 412a) which is configured to extend, in use, into the friction material (222); or a moulded engagement feature of a second type (312, 412b) which is configured to receive, in use, the friction material (222).

3. The method according to claim 2, wherein: the moulded engagement feature of the first type (212, 412a) comprises a protrusion which protrudes from the friction material mounting surface (210); and the moulded engagement feature of the second type (312, 412b) comprises a recess which extends into, but not all the way through, the backing plate (200, 300, 400).

4. The method according to any of the preceding claims, wherein: the mould (500) comprises a pressing plate (502); and the pressing plate comprises a pressing surface (504), the pressing surface comprising a complementary surface feature (506) which is an inverse counterpart of the moulded engagement feature (212, 312, 412a, 412b).

5. The method according to claim 4, wherein forming the backing plate comprises pressing the pressing surface (504) of the pressing plate (502) into the composite backing plate precursor (508) to mould the engagement feature (212, 312, 412a, 412b) into the friction material mounting surface (210).

6. The method according to any preceding claim, comprising: using a release agent during moulding to inhibit the composite backing plate precursor (508) from sticking to the mould (500) and to aid the backing plate (200, 300, 400) to be released from the mould (500); performing a soak treatment process on the backing plate (200, 300, 400) using a solvent for removing the release agent that has migrated into the composite of the backing plate during moulding; and subjecting the backing plate (200, 300, 400) to a heating cycle to remove the solvent.

7. The method according to any of the preceding claims, comprising: performing a roughening process to increase the roughness of the friction material mounting surface (210).

8. The method according to any of the preceding claims, comprising: applying an adhesive layer onto the friction material mounting surface (210); and performing a drying process to dry the adhesive layer.

9. The method according to any of the preceding claims, wherein: the moulded engagement feature (212, 312, 412a, 412b) comprises a flat surface offset with respect to the backing plate plane (208) in a direction perpendicular to the backing plate plane (208), wherein the flat surface is parallel to the backing plate plane (208).

10. The method according to any of the preceding claims, wherein: the friction material mounting surface (210) defining the moulded engagement feature (212, 312, 412a, 412b) is part of the layer of extended reinforcement fibres (600), and extended reinforcement fibres (602) of the layer of extended reinforcement fibres (600) traverse between the moulded engagement feature (212, 312, 412a, 412b) and the remainder of the friction material mounting surface (210) in a continuous manner.

11. A composite backing plate (200, 300, 400) for carrying a friction material (222) to form a brake pad unit of a disc brake assembly, the composite backing plate comprising a first side (202) and a second side (204) spaced apart from one another along a first axis (206), wherein: the composite backing plate (200, 300, 400) is formed from a composite material comprising reinforcement fibres, and the composite material is present throughout the entirety of the composite backing plate (200, 300, 400); the first side (202) defines a brake mounting surface for engaging with a backing plate mounting structure of the disk brake assembly; the second side (204) is a friction material mounting surface (210) defining a moulded engagement feature (212, 312, 412a, 412b) which is moulded into the friction material mounting surface (210), wherein: a first portion (214) of the friction material mounting surface comprising the moulded engagement feature (212, 312, 412a, 412b) is offset in the direction of the first axis (206) by a first offset amount (216) with the respect to a backing plate plane (208), the backing plate plane (208) being perpendicular to the first axis (206); a region of the friction material mounting surface (210) excluding the moulded engagement feature (212, 312, 412a, 412b) is offset in the direction of the first axis (206) by a second offset amount (220) with the respect to the backing plate plane (208); and the first offset amount (216) is different to the second offset amount (220),
**characterised in that** the friction material mounting surface (210) is defined by a layer (600) of extended reinforcement fibres (602) which extend from one side of the backing plate, in a continuous manner, to the opposite side of the backing plate.

12. The composite backing plate (200, 300, 400) according to claim 11, wherein the moulded engagement feature (212, 312, 412a, 412b) is in the form of: a moulded engagement feature of a first type (212, 412a) which is configured to extend, in use, into the friction material (222); or a moulded engagement feature of a second type (312, 412b) which is configured to receive, in use, the friction material (222).

13. The composite backing plate (200, 300, 400) according to claim 12, wherein: the friction material mounting surface (210) defines a plurality of the moulded engagement features (212, 312, 412a, 412b), wherein: at least one of the plurality of the moulded engagement features is of the first type; and/or at least one of the plurality of the moulded engagement features is of the second type.

14. The composite backing plate (200, 300, 400) according to any of claims 11 to 13, wherein: the friction material mounting surface (210) defining the moulded engagement feature (212, 312, 412a, 412b) is part of the layer of extended reinforcement fibres (600), and extended reinforcement fibres (602) of the layer of extended reinforcement fibres (600) traverse between the moulded engagement feature (212, 312, 412a, 412b) and the remainder of the friction material mounting surface (210) in a continuous manner.

15. A brake pad unit for a disc brake assembly, the brake pad unit comprising the composite backing plate (200, 300, 400) according to any of claims 11 to 14, and a friction pad (222), wherein: the friction pad (222) comprises a friction material bonded to the friction material mounting surface (210); and the friction pad (222) comprises a counterpart feature which is an inverse counterpart of the moulded engagement feature (212, 312, 412a, 412b) and engages with the moulded engagement feature.

## Patentansprüche

1. Verfahren zur Herstellung einer Trägerplatte (200, 300, 400) zum Tragen eines Reibmaterials (222) zur Bildung einer Bremsbelageinheit einer Scheibenbremsanordnung, wobei das Verfahren Folgendes umfasst:
Formen einer Trägerplatte (200, 300, 400) aus einem Verbund-Trägerplattenvorläufer (508) derart, dass die Trägerplatte eine erste Seite (202) und eine zweite Seite (204) aufweist, die entlang einer ersten Achse (206) voneinander beabstandet sind, wobei das Formen der Trägerplatte (200, 300, 400) Folgendes umfasst:
Anordnen des Verbund-Trägerplattenvorläufers (508) in einer Form (500);
Platzieren der Form (500) in einer beheizten Presse, die auf eine Temperatur eingestellt ist, die hoch genug ist, um ein Fließen in einer in dem Verbund-Trägerplattenvorläufer (508) enthaltenen Polymermatrix hervorzurufen; und
Verdichten der Form (500), um den Verbund-Trägerplattenvorläufer (508) zu komprimieren, um ein Fließen in der Polymermatrix bereitzustellen;
derart, dass die erste Seite (202) der Trägerplatte als eine Bremsmontagefläche zur Anlage an einer Trägerplattenmontagestruktur der Scheibenbremsanordnung konfiguriert ist; und die zweite Seite (204) als eine Reibmaterial-Montagefläche (210) konfiguriert ist, die ein geformtes Eingriffsmerkmal (212, 312, 412a, 412b) definiert;
wobei die Reibmaterial-Montagefläche (210) durch eine Schicht (600) aus erstreckten Verstärkungsfasern (602) definiert ist, die sich von einer Seite der Trägerplatte in einer kontinuierlichen Weise zur gegenüberliegenden Seite der Trägerplatte erstrecken;
ein erster Abschnitt (214) der Reibmaterial-Montagefläche, der das geformte Eingriffsmerkmal (212, 312, 412a, 412b) umfasst, in Richtung der ersten Achse (206) um einen ersten Versatzbetrag (216) in Bezug auf eine Trägerplattenebene (208) versetzt ist, wobei die Trägerplattenebene (208) senkrecht zur ersten Achse (206) verläuft;
ein zweiter Abschnitt (218) der Reibmaterial-Montagefläche ausschließlich des geformten Eingriffsmerkmals (212, 312, 412a, 412b) in Richtung der ersten Achse (206) um einen zweiten Versatzbetrag (220) in Bezug auf die Trägerplattenebene (208) versetzt ist; und
der erste Versatzbetrag (216) sich vom zweiten Versatzbetrag (220) unterscheidet.

2. Verfahren nach Anspruch 1, wobei das geformte Eingriffsmerkmal (212, 312, 412a, 412b) in Form von Folgendem vorliegt:
einem geformten Eingriffsmerkmal eines ersten Typs (212, 412a), das so konfiguriert ist, dass es sich im Gebrauch in das Reibmaterial (222) erstreckt; oder
einem geformten Eingriffsmerkmal eines zweiten Typs (312, 412b), das so konfiguriert ist, dass es im Gebrauch das Reibmaterial (222) aufnimmt.

3. Verfahren nach Anspruch 2, wobei:
das geformte Eingriffsmerkmal des ersten Typs (212, 412a) einen Vorsprung umfasst, der von der Reibmaterial-Montagefläche (210) vorsteht; und
das geformte Eingriffsmerkmal des zweiten Typs (312, 412b) eine Aussparung umfasst, die sich in die Trägerplatte (200, 300, 400) hinein, aber nicht ganz durch diese hindurch erstreckt.

4. Verfahren nach einem der vorhergehenden Ansprüche, wobei:
die Form (500) eine Pressplatte (502) umfasst; und
die Pressplatte eine Pressfläche (504) umfasst, wobei die Pressfläche ein komplementäres Oberflächenmerkmal (506) umfasst, das ein inverses Gegenstück zu dem geformten Eingriffsmerkmal (212, 312, 412a, 412b) ist.

5. Verfahren nach Anspruch 4, wobei das Formen der Trägerplatte das Pressen der Pressfläche (504) der Pressplatte (502) in den Verbund-Trägerplattenvorläufer (508) umfasst, um das Eingriffsmerkmal (212, 312, 412a, 412b) in die Reibmaterial-Montagefläche (210) zu formen.

6. Verfahren nach einem der vorhergehenden Ansprüche, umfassend:
Verwenden eines Trennmittels während des Formens, um zu verhindern, dass der Verbund-Trägerplattenvorläufer (508) an der Form (500) haftet, und um das Lösen der Trägerplatte (200, 300, 400) aus der Form (500) zu unterstützen;
Durchführen eines Einweichbehandlungsprozesses an der Trägerplatte (200, 300, 400) unter Verwendung eines Lösungsmittels zum Entfernen des Trennmittels, das während des Formens in den Verbundstoff der Trägerplatte migriert ist; und
Unterziehen der Trägerplatte (200, 300, 400) einem Heizzyklus, um das Lösungsmittel zu entfernen.

7. Verfahren nach einem der vorhergehenden Ansprüche, umfassend:
Durchführen eines Aufrauhungsprozesses, um die Rauheit der Reibmaterial-Montagefläche (210) zu erhöhen.

8. Verfahren nach einem der vorhergehenden Ansprüche, umfassend:
Auftragen einer Klebstoffschicht auf die Reibmaterial-Montagefläche (210); und
Durchführen eines Trocknungsprozesses zum Trocknen der Klebstoffschicht.

9. Verfahren nach einem der vorhergehenden Ansprüche, wobei:
das geformte Eingriffsmerkmal (212, 312, 412a, 412b) eine flache Oberfläche umfasst, die in einer Richtung senkrecht zur Trägerplattenebene (208) in Bezug auf die Trägerplattenebene (208) versetzt ist, wobei die flache Oberfläche parallel zur Trägerplattenebene (208) ist.

10. Verfahren nach einem der vorhergehenden Ansprüche, wobei:
die Reibmaterial-Montagefläche (210), die das geformte Eingriffsmerkmal (212, 312, 412a, 412b) definiert, Teil der Schicht (600) aus erstreckten Verstärkungsfasern (602) ist, und sich erstreckende Verstärkungsfasern (602) der Schicht aus erstreckten Verstärkungsfasern (600) zwischen dem geformten Eingriffsmerkmal (212, 312, 412a, 412b) und dem Rest der Reibmaterial-Montagefläche (210) in einer kontinuierlichen Weise erstrecken.

11. Verbund-Trägerplatte (200, 300, 400) zum Tragen eines Reibmaterials (222) zur Bildung einer Bremsbelageinheit einer Scheibenbremsanordnung, wobei die Verbund-Trägerplatte eine erste Seite (202) und eine zweite Seite (204) umfasst, die entlang einer ersten Achse (206) voneinander beabstandet sind, wobei:
die Verbund-Trägerplatte (200, 300, 400) aus einem Verbundmaterial geformt ist, das Verstärkungsfasern umfasst, und das Verbundmaterial in der Gesamtheit der Verbund-Trägerplatte (200, 300, 400) vorhanden ist;
die erste Seite (202) eine Bremsmontagefläche zur Anlage an einer Trägerplattenmontagestruktur der Scheibenbremsanordnung definiert;
die zweite Seite (204) eine Reibmaterial-Montagefläche (210) ist, die ein geformtes Eingriffsmerkmal (212, 312, 412a, 412b) definiert, das in die Reibmaterial-Montagefläche (210) geformt ist, wobei:
ein erster Abschnitt (214) der Reibmaterial-Montagefläche, der das geformte Eingriffsmerkmal (212, 312, 412a, 412b) umfasst, in Richtung der ersten Achse (206) um einen ersten Versatzbetrag (216) in Bezug auf eine Trägerplattenebene (208) versetzt ist, wobei die Trägerplattenebene (208) senkrecht zur ersten Achse (206) verläuft;
ein Bereich der Reibmaterial-Montagefläche (210) ausschließlich des geformten Eingriffsmerkmals (212, 312, 412a, 412b) in Richtung der ersten Achse (206) um einen zweiten Versatzbetrag (220) in Bezug auf die Trägerplattenebene (208) versetzt ist; und
der erste Versatzbetrag (216) sich vom zweiten Versatzbetrag (220) unterscheidet,
**dadurch gekennzeichnet, dass** die Reibmaterial-Montagefläche (210) durch eine Schicht (600) aus erstreckten Verstärkungsfasern (602) definiert ist, die sich von einer Seite der Trägerplatte in einer kontinuierlichen Weise zur gegenüberliegenden Seite der Trägerplatte erstrecken.

12. Verbund-Trägerplatte (200, 300, 400) nach Anspruch 11, wobei das geformte Eingriffsmerkmal (212, 312, 412a, 412b) in Form von Folgendem vorliegt:
einem geformten Eingriffsmerkmal eines ersten Typs (212, 412a), das so konfiguriert ist, dass es sich im Gebrauch in das Reibmaterial (222) erstreckt; oder
einem geformten Eingriffsmerkmal eines zweiten Typs (312, 412b), das so konfiguriert ist, dass es im Gebrauch das Reibmaterial (222) aufnimmt.

13. Verbund-Trägerplatte (200, 300, 400) nach Anspruch 12, wobei:
die Reibmaterial-Montagefläche (210) eine Vielzahl der geformten Eingriffsmerkmale (212, 312, 412a, 412b) definiert, wobei:
mindestens eines aus der Vielzahl der geformten Eingriffsmerkmale vom ersten Typ ist; und/oder
mindestens eines aus der Vielzahl der geformten Eingriffsmerkmale vom zweiten Typ ist.

14. Verbund-Trägerplatte (200, 300, 400) nach einem der Ansprüche 11 bis 13, wobei:
die Reibmaterial-Montagefläche (210), die das geformte Eingriffsmerkmal (212, 312, 412a, 412b) definiert, Teil der Schicht aus erstreckten Verstärkungsfasern (600) ist, und sich erstreckende Verstärkungsfasern (602) der Schicht aus erstreckten Verstärkungsfasern (600) zwischen dem geformten Eingriffsmerkmal (212, 312, 412a, 412b) und dem Rest der Reibmaterial-Montagefläche (210) in einer kontinuierlichen Weise erstrecken.

15. Bremsbelageinheit für eine Scheibenbremsanordnung, wobei die Bremsbelageinheit die Verbund-Trägerplatte (200, 300, 400) nach einem der Ansprüche 11 bis 14 und einen Reibbelag (222) umfasst, wobei:
der Reibbelag (222) ein Reibmaterial umfasst, das an die Reibmaterial-Montagefläche (210) gebunden ist; und
der Reibbelag (222) ein Gegenstückmerkmal umfasst, das ein inverses Gegenstück zu dem geformten Eingriffsmerkmal (212, 312, 412a, 412b) ist und mit dem geformten Eingriffsmerkmal in Eingriff steht.

## Revendications

1. - Procédé de fabrication d'une plaque de support (200, 300, 400) pour transporter un matériau de friction (222) afin de former une unité de patin de frein d'un ensemble frein à disque, le procédé comprenant : former une plaque de support (200, 300, 400) à partir d'un précurseur de plaque de support composite (508) de telle sorte que la plaque de support comprenne un premier côté (202) et un second côté (204) espacés l'un de l'autre le long d'un premier axe (206), la formation de la plaque de support (200, 300, 400) comprenant : disposer le précurseur de plaque de support composite (508) dans un moule (500) ; placer le moule (500) dans une presse chauffée réglée à une température suffisamment élevée pour induire un écoulement dans une matrice de polymère comprise dans le précurseur de plaque de support composite (508) ; et compacter le moule (500) afin de comprimer le précurseur de plaque de support composite (508) pour provoquer un écoulement dans la matrice de polymère ; de telle sorte que le premier côté (202) de la plaque de support soit configuré en tant que surface de montage de frein pour un engagement avec une structure de montage de plaque de support de l'ensemble frein à disque ; et que le second côté (204) soit configuré en tant que surface de montage de matériau de friction (210) définissant un élément d'engagement moulé (212, 312, 412a, 412b) ; dans lequel la surface de montage de matériau de friction (210) est définie par une couche (600) de fibres de renfort étendues (602) qui s'étendent d'un côté de la plaque de support, d'une manière continue, au côté opposé de la plaque de support ; une première partie (214) de la surface de montage de matériau de friction comprenant l'élément d'engagement moulé (212, 312, 412a, 412b) est décalée dans la direction du premier axe (206) d'une première quantité de décalage (216) par rapport à un plan de plaque de support (208), le plan de plaque de support (208) étant perpendiculaire au premier axe (206) ; une seconde partie (218) de la surface de montage de matériau de friction, à l'exception de l'élément d'engagement moulé (212, 312, 412a, 412b), est décalée dans la direction du premier axe (206) d'une seconde quantité de décalage (220) par rapport au plan de plaque de support (208) ; et la première quantité de décalage (216) est différente de la seconde quantité de décalage (220).

2. - Procédé selon la revendication 1, dans lequel l'élément d'engagement moulé (212, 312, 412a, 412b) est sous la forme de : un élément d'engagement moulé d'un premier type (212, 412a) qui est configuré pour s'étendre, lors de l'utilisation, dans le matériau de friction (222) ; ou un élément d'engagement moulé d'un second type (312, 412b) qui est configuré pour recevoir, lors de l'utilisation, le matériau de friction (222).

3. - Procédé selon la revendication 2, dans lequel : l'élément d'engagement moulé du premier type (212, 412a) comprend une saillie qui fait saillie à partir de la surface de montage de matériau de friction (210) ; et l'élément d'engagement moulé du second type (312, 412b) comprend un évidement qui s'étend dans, mais pas jusqu'au bout de, la plaque de support (200, 300, 400).

4. - Procédé selon l'une quelconque des revendications précédentes, dans lequel : le moule (500) comprend une plaque de pression (502) ; et la plaque de pression comprend une surface de pression (504), la surface de pression comprenant un élément de surface complémentaire (506) qui est une contrepartie inverse de l'élément d'engagement moulé (212, 312, 412a, 412b).

5. - Procédé selon la revendication 4, dans lequel la formation de la plaque de support comprend le pressage de la surface de pression (504) de la plaque de pression (502) dans le précurseur de plaque de support composite (508) afin de mouler l'élément d'engagement (212, 312, 412a, 412b) dans la surface de montage de matériau de friction (210).

6. - Procédé selon l'une quelconque des revendications précédentes, comprenant : utiliser un agent antiadhérent pendant le moulage pour empêcher le précurseur de plaque de support composite (508) d'adhérer au moule (500) et pour aider la plaque de support (200, 300, 400) à être démoulée du moule (500); effectuer un processus de traitement de trempage sur la plaque de support (200, 300, 400) à l'aide d'un solvant afin de retirer l'agent antiadhérent qui a migré dans le composite de la plaque de support (200, 300, 400) pendant le moulage ; et soumettre la plaque de support (200, 300, 400) à un cycle de chauffage pour retirer le solvant.

7. - Procédé selon l'une quelconque des revendications précédentes, comprenant : effectuer un processus de rugosification pour augmenter la rugosité de la surface de montage de matériau de friction (210).

8. - Procédé selon l'une quelconque des revendications précédentes, comprenant : appliquer une couche adhésive sur la surface de montage de matériau de friction (210) ; et effectuer un processus de séchage pour sécher la couche adhésive.

9. - Procédé selon l'une quelconque des revendications précédentes, dans lequel : l'élément d'engagement moulé (212, 312, 412a, 412b) comprend une surface plate décalée par rapport au plan de plaque de support (208) dans une direction perpendiculaire au plan de plaque de support (208), la surface plate étant parallèle au plan de plaque de support (208).

10. - Procédé selon l'une quelconque des revendications précédentes, dans lequel : la surface de montage de matériau de friction (210) définissant l'élément d'engagement moulé (212, 312, 412a, 412b) fait partie de la couche de fibres de renfort étendues (600), et les fibres de renfort étendues (602) de la couche de fibres de renfort étendues (600) traversent entre l'élément d'engagement moulé (212, 312, 412a, 412b) et le reste de la surface de montage de matériau de friction (210) d'une manière continue.

11. - Plaque de support composite (200, 300, 400) pour transporter un matériau de friction (222) afin de former une unité de patin de frein d'un ensemble frein à disque, la plaque de support composite comprenant un premier côté (202) et un second côté (204) espacés l'un de l'autre le long d'un premier axe (206), dans laquelle : la plaque de support composite (200, 300, 400) est formée à partir d'un matériau composite comprenant des fibres de renfort, et le matériau composite est présent à travers la totalité de la plaque de support composite (200, 300, 400) ; le premier côté (202) définit une surface de montage de frein pour un engagement avec une structure de montage de plaque de support de l'ensemble frein à disque ; le second côté (204) est une surface de montage de matériau de friction (210) définissant un élément d'engagement moulé (212, 312, 412a, 412b) qui est moulé dans la surface de montage de matériau de friction (210), dans laquelle : une première partie (214) de la surface de montage de matériau de friction comprenant l'élément d'engagement moulé (212, 312, 412a, 412b) est décalée dans la direction du premier axe (206) d'une première quantité de décalage (216) par rapport à un plan de plaque de support (208), le plan de plaque de support (208) étant perpendiculaire au premier axe (206) ; une région de la surface de montage de matériau de friction (210), à l'exception de l'élément d'engagement moulé (212, 312, 412a, 412b), est décalée dans la direction du premier axe (206) d'une seconde quantité de décalage (220) par rapport au plan de plaque de support (208) ; et la première quantité de décalage (216) est différente de la seconde quantité de décalage (220),
**caractérisée par le fait que** la surface de montage de matériau de friction (210) est définie par une couche (600) de fibres de renfort étendues (602) qui s'étendent d'un côté de la plaque de support, d'une manière continue, au côté opposé de la plaque de support.

12. - Plaque de support composite (200, 300, 400) selon la revendication 11, dans laquelle l'élément d'engagement moulé (212, 312, 412a, 412b) se présente sous la forme de : un élément d'engagement moulé d'un premier type (212, 412a) qui est configuré pour s'étendre, lors de l'utilisation, dans le matériau de friction (222) ; ou un élément d'engagement moulé d'un second type (312, 412b) qui est configuré pour recevoir, lors de l'utilisation, le matériau de friction (222).

13. - Plaque de support composite (200, 300, 400) selon la revendication 12, dans laquelle : la surface de montage de matériau de friction (210) définit une pluralité des éléments d'engagement moulés (212, 312, 412a, 412b), dans laquelle : au moins l'un de la pluralité des éléments d'engagement moulés est du premier type ; et/ou au moins l'un de la pluralité des éléments d'engagement moulés est du second type.

14. - Plaque de support composite (200, 300, 400) selon l'une quelconque des revendications 11 à 13, dans laquelle : la surface de montage de matériau de friction (210) définissant l'élément d'engagement moulé (212, 312, 412a, 412b) fait partie de la couche de fibres de renfort étendues (600), et les fibres de renfort étendues (602) de la couche de fibres de renfort étendues (600) traversent entre l'élément d'engagement moulé (212, 312, 412a, 412b) et le reste de la surface de montage de matériau de friction (210) de manière continue.

15. - Unité de patin de frein pour un ensemble frein à disque, l'unité de patin de frein comprenant la plaque de support composite (200, 300, 400) selon l'une quelconque des revendications 11 à 14, et un patin de friction (222), dans laquelle : le patin de friction (222) comprend un matériau de friction lié à la surface de montage de matériau de friction (210) ; et le patin de friction (222) comprend un élément de contrepartie qui est une contrepartie inverse de l'élément d'engagement moulé (212, 312, 412a, 412b) et s'engage avec l'élément d'engagement moulé.
